# EUROPEAN PATENT SPECIFICATION

(11) **EP 0 350 168 B1**
(45) Date of publication and mention of the grant of the patent: **29.04.1998**
(21) Application number: 89305897.4
(22) Date of filing: 12.06.1989
(51) Int. Cl.: B32B 27/08

(54) **Polymeric films**
Polymerfilme
Films polymères

(30) Priority: 05.07.1988 GB 8815983
(43) Date of publication of application: 10.01.1990
(73) Proprietor: COURTAULDS FILMS (HOLDINGS) LIMITED, Bridgwater Somerset TA6 4PA (GB)
(72) Inventor: Sullivan, Janette Mary, Narborough Leicester LE9 5WD (GB)
(74) Representative: Claisse, John Anthony, Dr.

(56) References cited:
- EP-A- 71 349
- EP-A- 189 242
- EP-A- 0 217 598
- EP-A- 0 263 963
- US-A- 4 117 193
- B.S.2783 Method 824A

## Description

This invention concerns polymeric films, and in particular polymeric films having particular slip properties.

It is known to modify the slip of a polymeric film by the application of a coating of a silicone oil to one surface of the film or by compounding a silicone oil with only one outer layer of the film. When these films are wound up, silicone is transferred from the coated surface to the uncoated surface of the film, or from the outer layer with which it is compounded to the other outer layer with which it is not compounded (EP 0217598), and slip properties are thereby achieved for the two surfaces of the film as a result of the silicone present on the two film surfaces. The increased degree of slip resulting from the use of increasing amounts of silicone can enable packaging machinery to operate at higher speeds. However, increased slip for the outer surface of the film is accompanied by increased slip for the inner surface of the film, and this is particularly disadvantageous for certain uses of such films since they slip to an unacceptable degree on the articles being packaged. The result is that the film is not sufficiently tight on the articles being packaged.

It has also been proposed in EP 0071349 to spray the interior of polyolefin films produced by the so-called bubble process with silicone oil to prevent unwanted sealing between the interior surfaces of the film when the bubble is collapsed.

EP-A-0189242 discloses a three-layered film including fatty acid amide as a slip agent in its outer layers with differing amounts of antiblock agent. Such films have relatively poor slip properties when used in high speed packaging machinery.

EP-A-0263963 describes a three-layer film consisting of a core layer consisting essentially of an isotactic polypropylene and two outer heat-sealable layers of an ethylene/propylene copolymer having a coating of a silicone slip agent, one outer layer having been corona treated in order to increase its surface energy.

According to the present invention there is provided a polymeric film comprising a core layer of a propylene homopolymer which can contain materials used in the art to modify the physical properties of the film, the core layer having on one surface thereof a heat-sealable layer containing from 0.15 to 0.30 percent by weight of an antiblock agent, and on the other surface thereof a heat-sealable layer containing from 0.01 to 0.15 percent by weight of an antiblock agent, wherein no equal amounts of antiblock agent are present in both heat-sealable layers, the amounts of antiblock agent in each case being based on the weights of the respective heat-sealable layers, one of the heat-sealable layers having been treated to increase its surface energy, this being the heat-sealable layer containing the lesser amount of antiblock agent, each heat-sealable layer having a coating of a silicone slip agent thereon, and the slip of the surface of one coated heat-sealable layer as measured by B.S. 2782 Method 824A is different from that of the other.

Films of the present invention preferably have a difference in slip measured according to B.S. 2782 Method 824A of at least 0.6 units, more particularly at least 1.0 unit, and especially at least 2.0 units. Such films have been particularly advantageous in wrapping containers at high speed whilst combining low slip on the container with high slip between packaged containers.

A difference in slip as measured by B.S. 2782 Method 824A is achieved by the use of the specified different amounts of antiblock agent in the two heat-sealable layers, using either the same polymer or different polymers for the heat-sealable layers, plus treatment of one surface of the film to increase its surface energy. One surface of the films of the invention is treated to increase the surface energy of the film and thereby to provide and/or increase the difference in slip between the surfaces of the film. When the heat-sealable layers contain different amounts of antiblock agent, the layer containing the lesser amount of antiblock agent should be treated.

The same polymer can be used for the two heat-sealable layers or the polymers used for the two layers can have a difference in Vicat softening point of not more than 10°C as measured by ASTM D1525. However, substantial differences in slip can be achieved if the heat-sealable layers have Vicat softening points which differ by more than 10°C as measured by ASTM D1525.

Treatments which can be used to increase the surface energy of the film include corona discharge treatment and flame treatment.

The polymers used to form the heat-sealable layers can be selected from those known in the art. One preferred class of polymers which can be used contains units derived from at least two of ethylene, propylene and but-1-ene, a major amount in each case being derived from propylene. Another class of polymers which can be used is low density polyethylenes. It is generally preferred that at least one of the heat-sealable layers is a propylene/ethylene copolymer, for example containing from 3 to 5, and preferably about 4, percent by weight of units derived from ethylene, especially where the same polymer is used for each layer. Where different polymers are used for the two layers, it is preferred that one is a propylene/ethylene copolymer and the other is a propylene/but-1-ene copolymer or a low density polyethylene, for example a linear low density polyethylene.

The absolute Vicat softening points of the polymer or polymers should be such as not adversely to affect the properties of the resultant films. For example, satisfactory results have been achieved with polymers having Vicat softening points in the range of from 90 to 125°C. In all cases, the Vicat softening points of the polymers are as measures by ASTM D1525.

The antiblock agent used in each layer, usually 0.01 to 0.30 percent by weight of the heat-sealable layer, can be selected from those known in the art, the preferred agent being silica. The mean particle size of the antiblock agent is preferably from 2 to 10 µm, more preferably from 4 to 6 µm, and especially about 5 µm.

The thickness of the polymeric core, which is preferably of a propylene homopolymer, can be, for example, from 15 to 50 µm. The thickness of the heat-sealable layers will usually be from 0.5 to 3.0 µm, and more particularly from 0.8 to 1.5 µm. Typically, a film of the present invention can be about 21 µm thick although thicker or thinner films can be produced according to the intended use.

The polymeric core can contain materials used in the art to modify the physical properties of the film, for example an anti-static agent, e.g. a bis-(2-hydroxyethyl)-amine.

It is generally preferred that the surface of the film having a silicon coating applied thereto is not subjected to a treatment to increase its surface energy, but of course silicone will be transferred from the silicone coated surface to the treated surface when the film is wound up.

The silicone coating on each surface of the films of the invention will usually have a viscosity of at least 10,000 cm²sec⁻¹ (centistokes), preferably at least 30,000 cm²sec⁻¹ and advantageously about 100,000 cm²sec⁻¹. In general, a coating of a silicone will be applied to one surface of the film, and this coating will then be transferred to the other surface of the film when the film is wound into a roll.

Films of the present invention can be manufactured in known manner and they will usually be biaxially oriented, for example sequentially or using a bubble technique.

The following Examples are given by way of illustration only. All parts are by weight unless stated otherwise.

### Example 1 (comparison)

A three-layer polymeric web was produced by coextruding a core layer of a propylene homopolymer with a layer of a propylene/ethylene copolymer (4% ethylene) containing 0.20 percent by weight of silica of 5 µm particle size on one side, and a layer of the same copolymer but containing 0.10 percent by weight of silica on the other side.

The web was stretched 4.5 times in the direction of extrusion, and the layer containing 0.20 percent by weight of silica was coated with a layer of a silicone slip agent. The resulting coated film was then stretched 10 times in the transverse direction, and wound up. After approximately twenty one days, when the silicone from the coating on one face of the film had transferred to the other face of the film, the slip of each face of the film to itself was then measured according to B.S.2782 Method 824A. The thickness of the silicone coating on each surface of the film after this time was 1.1-1.2 nm (11-12 Ångstroms) as measured by X-ray photo electron spectroscopy. The results are shown in the accompanying Table.

### Example 2

The procedure of Example 1 was repeated, but with the surface not having the silicone coating applied thereto being corona discharge treated before wind-up of the film.

The test results obtained with the film are shown in the accompanying Table.

### Examples 3-12

The procedure of Examples 1 and 2 were repeated using outer layers with different amounts of antiblock agents and/or different polymers, as shown in the accompanying Table.

The slip values for the various films were measures, the films of Examples 4, 6, 8 and 10 being in accordance with the invention, and those of Examples 3, 5, 7, 9, 11 and 12 being by way of comparison.

A significant differential slip was noted where the difference in film-to-film slip between outer to outer and inner to inner surfaces, as measured according to B.S. 2782 Method 824A, was greater than 0.6 slip units.

**TABLE**

| Example | Outside Face | Inside Face | Slip Film-Film | |
|---|---|---|---|---|
| | | | Static 0-0/I-I | Dynamic 0-0/I-I |
| 1 | 2000ppm, 5µm silica | 1000ppm, 5µm silica in PP-co-E | 3.3/3.3 | 4.7/4.4 |
| 2 | As Example 1 | As Example 1 but corona treated to 0.42 mN (42 dynes) | 3.1/3.0 | 4.4/3.6 |
| 3 | As Example 1 | 500ppm, 5µm silica in PP-co-E | 3.2/3.3 | 4.3/4.7 |
| 4 | As Example 1 | As Example 3 but corona treated to 0.42 mN (42 dynes) | 3.0/2.2 | 5.2/2.9 |
| 5 | As Example 1 | 500ppm, 2µm silica in PP-co-E | 3.5/3.3 | 4.6/4.9 |
| 6 | As Example 1 | As Example 5 but corona treated to 0.42 mN (42 dynes) | 3.2/2.2 | 4.8/3.4 |
| 7 | As Example 1 | 100ppm, 5µm silica in PP-co-E | 3.2/2.6 | 4.7/4.3 |
| 8 | As Example 1 | As Example 7 but corona treated to 0.42 mN (42 dynes) | 3.5/2.3 | 4.7/3.8 |
| 9 | As Example 1 | 100ppm, 2µm silica in PP-co-E | 3.6/2.2 | 4.3/4.7 |
| 10 | As Example 1 | As Example 9 but corona treated to 0.42 mN (42 dynes) | 3.3/2.1 | 5.0/3.7 |
| 11 | As Example 1 | 500ppm, 5µm silica in PP-co-B (33% butene) | 3.0/2.2 | 4.2/3.1 |
| 12 | As Example 1 | 1000ppm, 5µm silica in LLDPE | 3.6/2.6 | 5.6/4.3 |

## Claims

1. A polymeric film comprising a core layer of a propylene homopolymer, the core layer having on one surface thereof a heat-sealable layer containing from 0.15 to 0.30 percent by weight of an antiblock agent, and on the other surface thereof a heat-sealable layer containing from 0.01 to 0.15 percent by weight of an antiblock agent, wherein no equal amounts of antiblock agent are present in both heat-sealable layers, the amounts of antiblock agent in each case being based on the weights of the respective heat-sealable layers, one of the heat-sealable layers having been treated to increase its surface energy, this being the heat-sealable layer containing the lesser amount of antiblock agent, each heat-sealable layer having a coating of a silicone slip agent thereon, and the slip of the surface of one coated heat-sealable layer as measured by B.S. 2782 Method 824A is different from that of the other.

2. A film according to claim 1, wherein the heat-sealable layers are of the same polymer containing different amounts of antiblock agent.

3. A film according to claim 1, wherein the heat-sealable layers are of different polymers having Vicat softening points as measured by ASTM D1525 differing by up to 10°C.

4. A film according to claim 1, wherein the heat-sealable layers are of different polymers having Vicat softening points as measured by ASTM D1525 differing by at least 10°C.

5. A film according to any of the preceding claims, wherein at least one of the heat-sealable layers is of a propylene/ethylene copolymer.

6. A film according to any of the preceding claims, wherein the antiblock agent comprises silica.

## Patentansprüche

1. Polymerfolle, **gekennzeichnet durch** eine Innenschicht aus einem Propylen-Homopolymer, die auf der einen Oberfläche eine heißsiegelbare Schicht, die 0,15 - 0,30 Gew% eines Antiblockmittels enthält, und auf der anderen Oberfläche eine heißsiegelbare Schicht, die 0,01 - 0,15 Gew% Antiblockmittel enthält, aufweist, wobei in den beiden heißsiegelbaren Schichten die Mengen an Antiblockmittel nicht gleich sind, in jedem Fall die Mengen an Antiblockmitteln auf den Gewichten der jeweiligen heißsiegelbaren Schichten basieren, die heißsiegelbare Schicht mit der geringeren Menge Antiblockmittel einer Behandlung zur Erhöhung ihrer Oberflächenenergie unterzogen worden ist und alle heißsiegelbaren Schichten eine Beschichtung mit einem Silikongleitmittel aufweisen, wobei die Oberflächengleitfähigkeit der einen beschichteten, heißsiegelbaren Schicht gemessen nach B.S. 2782 Methode 824 A von der der anderen verschieden ist.

2. Folie nach Anspruch 1, **dadurch gekennzeichnet**, daß die heißsiegelbaren Schichten das gleiche Polymer aber verschiedene Mengen Antiblockmittel enthalten.

3. Folie nach Anspruch 1, **dadurch gekennzeichnet**, daß die heißsiegelbaren Schichten verschiedene Polymere enthalten und Vicat-Erweichungspunkte aufweisen, die gemessen nach ASTM D1525 um bis zu 10°C differieren.

4. Folie nach Anspruch 1, **dadurch gekennzeichnet**, daß die heißsiegelbaren Schichten verschiedene Polymere enthalten und Vicat-Erweichungspunkte aufweisen, die gemessen nach ASTM D1525 um mindestens 10°C differieren.

5. Folie nach einem der vorhergehenden Ansprüche, **dadurch gekennzeichnet**, daß mindestens eine der heißsiegelbaren Schichten ein Propylen/Ethyien-Copolymer enthält.

6. Folie nach einem der vorhergehenden Ansprüche, **dadurch gekennzeichnet**, daß das Antiblockmittel Siliciumdioxid enthält.

## Revendications

1. Film polymère comprenant une couche de coeur d'un homopolymère de propylène, la couche de coeur ayant sur l'une de ses surfaces une couche thermoscellable contenant de 0,15 à 0,30 % en poids d'un agent anti-adhérence de contact, et sur son autre surface, une couche thermoscellable contenant de 0,01 à 0,15 % en poids d'un agent anti-adhérence de contact, dans lequel les deux couches thermoscellables comprennent des quantités non égales d'agent anti-adhérence de contact, les quantités de l'agent anti-adhérence de contact dans chaque cas étant rapportées au poids des couches thermoscellables respectives, l'une des couches thermoscellables ayant été traitée pour augmenter son énergie superficielle, cette couche étant la couche thermoscellable contenant la quantité la plus petite d'agent anti-adhérence de contact, chaque couche thermoscellable étant revêtue d'un revêtement d'un agent de glissement siliconé, le glissement de la surface de l'une des couches thermoscellables revêtues, tel que mesuré par la méthode 824A de la norme B.S. 2782, étant différent de celui de l'autre.

2. Film selon la revendication 1, dans lequel les couches thermoscellables sont en le même polymère contenant des quantités différentes d'agent anti-adhérence de contact.

3. Film selon la revendication 1, dans lequel les couches thermoscellables sont en des polymères différents, dont les points de ramollissement de Vicat, tels que mesurés selon ASTM D1525, présentent une différence allant jusqu'à 10°C.

4. Film selon la revendication 1, dans lequel les couches thermoscellables sont en des polymères différents, dont les points de ramollissement de Vicat, tels que mesurés selon ASTM D1525, présentent une différence d'au moins 10°C.

5. Film selon l'une quelconque des revendications précédentes, dans lequel au moins l'une des couches thermoscellables est en un copolymère propylène/éthylène.

6. Film selon l'une quelconque des revendications précédentes, dans lequel l'agent anti-adhérence de contact comprend de la silice.
